# EUROPEAN PATENT APPLICATION

(11) **EP 1 267 267 A1**
(43) Date of publication of application: **18.12.2002**
(21) Application number: 01912269.6
(22) Date of filing: 12.03.2001
(51) Int. Cl.: G06F 12/00, G06F 13/00, G06F 17/30

(54) **INFORMATION DISPLAY, INFORMATION RECORDED MEDIUM, AND INFORMATION PROVIDING APPARATUS**

(30) Priority: 21.03.2000 JP 2000083291
(71) Applicant: Sony Corporation, Tokyo 141-0001 (JP)
(72) Inventor: KATO, Kosuke SONY CORPORATION, Shinagawa-ku, Tokyo 141-0001 (JP); MIYASHITA, Hidehisa SONY CORPORATION, Shinagawa-ku, Tokyo 141-0001 (JP); HARADA, Tadanori SONY CORPORATION, Shinagawa-ku, Tokyo 141-0001 (JP)
(74) Representative: Ayers, Martyn Lewis Stanley
(86) International application number: JP0101913
(87) International publication number: WO01071503

(57) **Abstract**

An information display apparatus which enables an operator to perform a facilitated operation based on the information pertinent to a picture displayed on a display device, using the picture as a clue. The display apparatus acquires, from an information source, an information container including the information for specifying the picture information and the related information associated with the picture information specified by the picture information specifying information, interprets the information container, then acquires and displays the picture information. When the operator has specified the picture information, the information display apparatus initiates the processing based on the related information pertinent to the so specified picture information.

## Description

### Technical Field

The present invention relates to an information displaying apparatus and an information providing apparatus useful when used mainly in a digital television system, in which an operation on the part of an operator may be carried out extremely readily, using the information pertinent to a picture displayed on a display device as a clue.

More particularly, the present invention relates to a displaying apparatus for displaying the main display information obtained from an information source, which receives picture data distributed with the main display information and including related information such as a network address or a program component, and displays it, by which network access is made easier.

### Background Art

Recently, with the Internet coming into widespread use, the number of servers accessible from terminals connected to the Internet is drastically increasing. In each server, a variety of information is recorded in accordance with the intention of the supervisor, such that a terminal operator is able to acquire the information by accessing the server from his or her terminal. In general, an operator willing to access the information on the Internet inputs a letter string termed URL from his or her terminal.

It should be noted that a terminal operator is generally highly likely to access the specified information on specified particular servers. Thus, in order to permit the terminal operator to access the information with a small number of operating steps, there is provided a function known as a bookmark. In the bookmark function, the identification of the information in question is represented by a sole letter string or a sole picture or icon. The operator selects and identifies the information, using the letter string as a clue, to access the so identified information. By this function, the information can be accessed more speedily for information identification than if a letter string such as URL is input to identify the information.

Meanwhile, the above-described technique is used not only in the personal computers, but has come to be applied extensively in the field of home electrical appliances in general. In particular, in an information terminal, termed digital television, not only is the broadcast simply received, but the system is connected to the network, in order to permit the information terminal to access the specified information.

As the related technique, the Japanese Laid-Open Publication H-11-224269 discloses a computer in which a pre-set page can be accessed when a client computer acts on a bookmark sent from a server computer. The Japanese Laid-Open Publication H-6-51972, on the other hand, discloses an information processing apparatus in which, if a given button is pushed on the Window system, other buttons operate with them.

However, in the bookmark function, a given letter string simply specifies the site of the information. As a consequence, the processing via this bookmark simply accesses a specified site without inducing any further operations. Moreover, if an information supplier is willing to bookmark plural network addresses, the viewer is not allowed to execute the management collectively.

### Disclosure of the Invention

It is an object of the present invention to overcome the aforementioned problem of the prior art. For accomplishing the object, the present invention provides an information display apparatus wherein the picture information having an identifier for specifying is obtained from an information source and displayed, the related information is requested from a server with the identifier as a clue, and wherein, when an operator has specified the picture information, processing is initiated based on the related information.

The present invention also provides an information display apparatus wherein an information container including the information specifying the picture information and the related information corresponding to the picture information is obtained from an information source and interpreted, after which the picture information is obtained and displayed, and wherein processing is initiated based on the related information when an operator has identified the picture information to resolve the technical problem inherent in the prior art.

The present invention also provides an information display apparatus wherein an information container including the information specifying the picture information and the related information corresponding to the picture information is obtained from an information source and interpreted, after which the picture information is obtained and displayed in a first management area and wherein, if an operator has specified the picture information displayed in the first management area, the related information and the picture are memorized and the picture information is displayed in a second management area, whereas, if the operator has specified the picture information displayed in the second management area, processing is initiated based on the related information associated with the picture to resolve the problem inherent in the prior art.

The present invention also provides an information display apparatus wherein the first picture information is obtained from an information source and displayed in a first management area, and wherein, if an operator has specified the first picture information, the second picture information and the related information pertinent to the second picture information are obtained anew from the information source and memorized, with the second picture information being displayed in a second management area, whereas, if the operator has specified the second picture information displayed in the second management area, processing is initiated based on the related information associated with the picture to resolve the problem inherent in the prior art.

The present invention also provides an information display apparatus wherein, if a notification to the effect that an operator has specified the picture information from a unit adapted for obtaining and displaying the picture information is made after obtaining an information container including the information specifying the picture information and the related information pertinent to the picture information from an information source, the related information is acquired from the unit and processing is initiated based on the so acquired related information to resolve the problem the conventional art presents. That is, the operation as a plug-in module is achieved for a unit acquiring and displaying the first picture information in the information providing apparatus of the present invention.

The present invention also provides an information display apparatus wherein, if a notification to the effect that an operator has specified the picture information from a unit adapted for obtaining and displaying the picture information is made after obtaining an information container including the information specifying the picture information and the related information pertinent to the picture information from an information source, the related information and the picture are acquired from the unit and memorized, at the same time as the picture information is displayed on a management area on a display device, wherein, if a notification is made to the effect that the picture information has been specified, processing is initiated based on the related information associated with the picture information to resolve the problem the conventional art presents. That is, the operation as a plug-in module is achieved for a unit acquiring and displaying the first picture information in the information providing apparatus of the present invention.

The present invention also provides an information display apparatus wherein, if a notification is made from a unit adapted for acquiring the first picture information from an information source for display on a first management area, to the effect that the operator has specified the first picture information, the second picture information and the related information pertinent to the second picture information are obtained from the information source and memorized, with the second picture information being displayed on a second management area, and wherein, if the operator has specified the second picture information displayed on the second management area, processing is initiated based on the related information associated with the picture to resolve the problem the conventional art presents. That is, the operation as a plug-in module is achieved for a unit acquiring and displaying the first picture information in the information providing apparatus of the present invention.

Moreover, the present invention also provides an information recording medium for causing e.g., a computer to operate as an information display apparatus to resolve the problem inherent in the prior art.

The present invention also provides an information providing apparatus for providing the information specifying, as an information container, the picture information and at least two related information which will guide an operator to execute a preset processing in association with the picture information to resolve the problem the conventional art presents. That is, the present invention operates for furnishing the corresponding information to the information display apparatus according to the present invention.

In addition, the present invention provides an information recording medium for adding the function as an information providing apparatus to resolve the problem the conventional art presents.

Other objects, features and advantages of the present invention will become apparent from the following description of preferred embodiments thereof and the claims.

### Brief Description of the Drawings

Fig.1 illustrates the structure of a system common to the embodiments of the present invention.
Fig.2 illustrates a graphic user interface by drag and drop as an embodiment of the present invention.
Fig.3 illustrates a first management area of another graphic user interface as an embodiment of the present invention.
Fig.4 illustrates a second management area of the graphic user interface shown in Fig.3.
Fig.5 illustrates another graphic user interface as an embodiment of the present invention.
Fig.6 shows an illustrative structure of the picture information used for embedding the information.
Fig.7 shows another illustrative structure of the picture information used for embedding the information.
Fig.8 is an information flow diagram in a first embodiment of the present invention.
Fig.9 is a system structure diagram in the first embodiment of the present invention.
Fig.10 shows an embodiment in a computer environment in the first embodiment of the present invention.
Fig.11 shows an embodiment in a digital television environment in the first embodiment of the present invention.
Fig.12 shows an embodiment in a portable terminal environment in a first embodiment of the present invention.
Fig.13 is an information flow diagram in a second embodiment of the present invention.
Fig.14 is a system structure diagram in a second embodiment of the present invention.
Fig.15 shows an embodiment in a computer environment in the second embodiment of the present invention.
Fig.16 shows an embodiment in a digital television environment in the second embodiment of the present invention.
Fig.17 shows an embodiment in a portable terminal environment in the second embodiment of the present invention.
Fig.18 is an information flow diagram in a third embodiment of the present invention.
Fig.19 is a system structure diagram in the third embodiment of the present invention.
Fig.20 shows an embodiment in a computer environment in the third embodiment of the present invention.
Fig.21 shows an embodiment in a digital television environment in the third embodiment of the present invention.
Fig.22 shows an embodiment in a portable terminal environment in the third embodiment of the present invention.
Fig.23 is an information flow diagram in a fourth embodiment of the present invention.
Fig.24 is a system structure diagram in the fourth embodiment of the present invention.
Fig.25 shows an embodiment in a computer environment in the fourth embodiment of the present invention.
Fig.26 shows an embodiment in a digital television environment in the fourth embodiment of the present invention.
Fig.27 shows an embodiment in a portable terminal environment in the fourth embodiment of the present invention.
Fig.28 is an information flow diagram in a fifth embodiment of the present invention.
Fig.29 is a system structure diagram in the fifth embodiment of the present invention.
Fig.30 shows an embodiment in a computer environment in the fifth embodiment of the present invention.
Fig.31 shows an embodiment in a digital television environment in the fifth embodiment of the present invention.
Fig.32 shows an embodiment in a portable terminal environment in the fifth embodiment of the present invention.
Fig.33 is an information flow diagram in a fifth embodiment of the present invention.
Fig.34 is a system structure diagram in the fifth embodiment of the present invention.
Fig.35 shows an embodiment in a computer environment in the fifth embodiment of the present invention.
Fig.36 shows an embodiment in a digital television environment in the fifth embodiment of the present invention.
Fig.37 shows an embodiment in a portable terminal environment in the fifth embodiment of the present invention.
Fig.38 is an information flow diagram in a fifth embodiment of the present invention.
Fig.39 is a system structure diagram in the fifth embodiment of the present invention.
Fig.40 shows an embodiment in a computer environment in the fifth embodiment of the present invention.
Fig.41 shows an embodiment in a digital television environment in the fifth embodiment of the present invention.
Fig.42 shows an embodiment in a portable terminal environment in the fifth embodiment of the present invention.
Fig.43 shows an example of an information container including the related information using XML (eXtended Markup Language).
Fig.44 shows an example of an information container including the related information as a program.

### Best mode for Carrying out the Invention

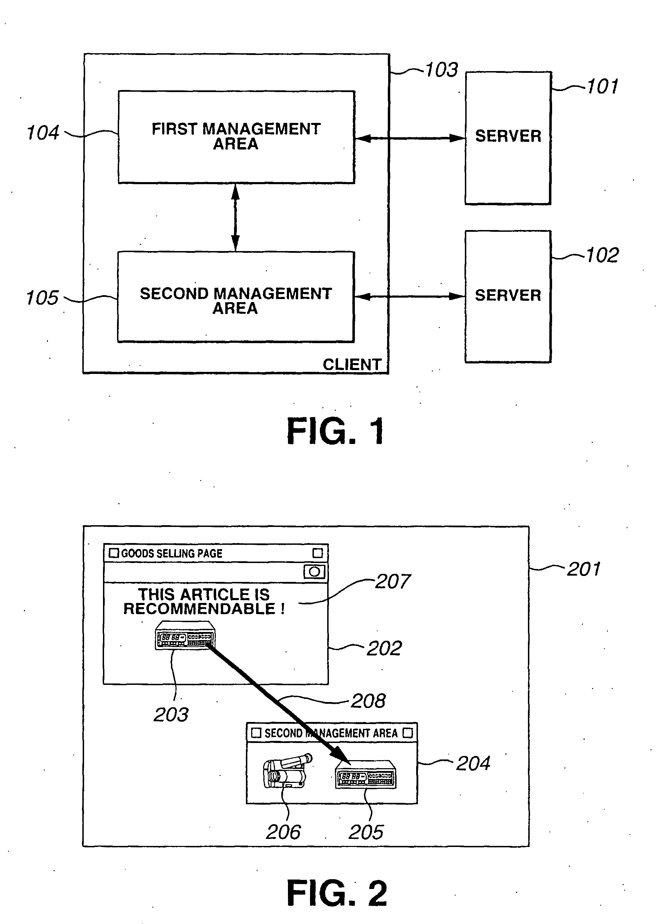

Referring to Figs.1 to 44, preferred embodiments of the present invention are hereinafter explained.

### (1. Related Information )

First, the related information, as a concept used in common in the present invention, is explained.

The related information is the information as the basis when it is desired to let the viewer execute a specified operation, with the picture information as a clue, and means the totality of the information included in the picture information. Specifically, the related information is the information correlated with the icon or the included picture information. By way of an example, the related information is the information specifying the information which is stored in a particular server and which is desired to be referenced by the viewer, such as URL or IP address. If a particular program is desired to be operated, the name of the program or the program itself may be included in the related information.

### (2. Picture information including the information)

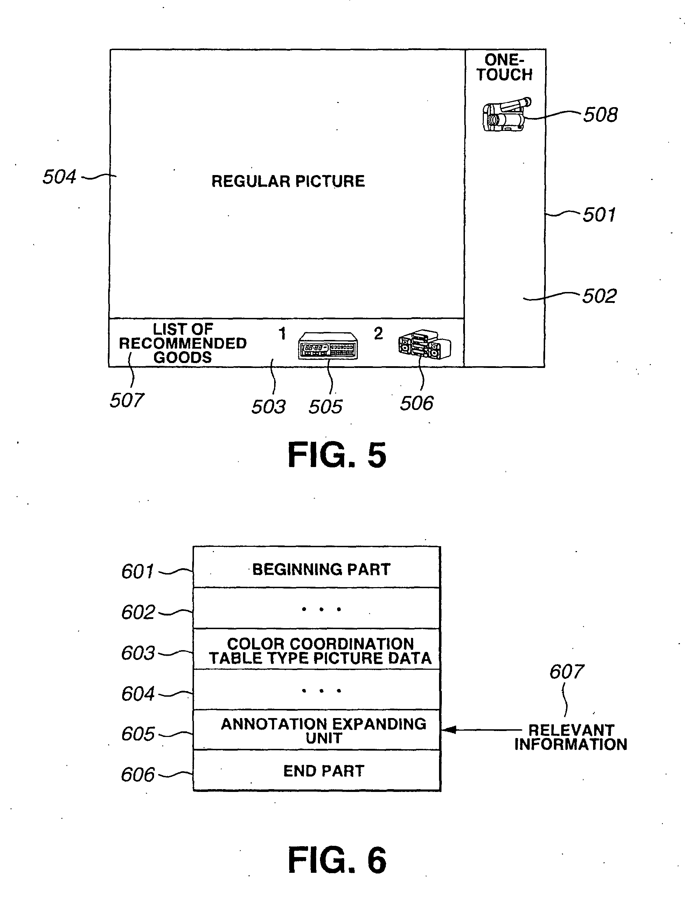

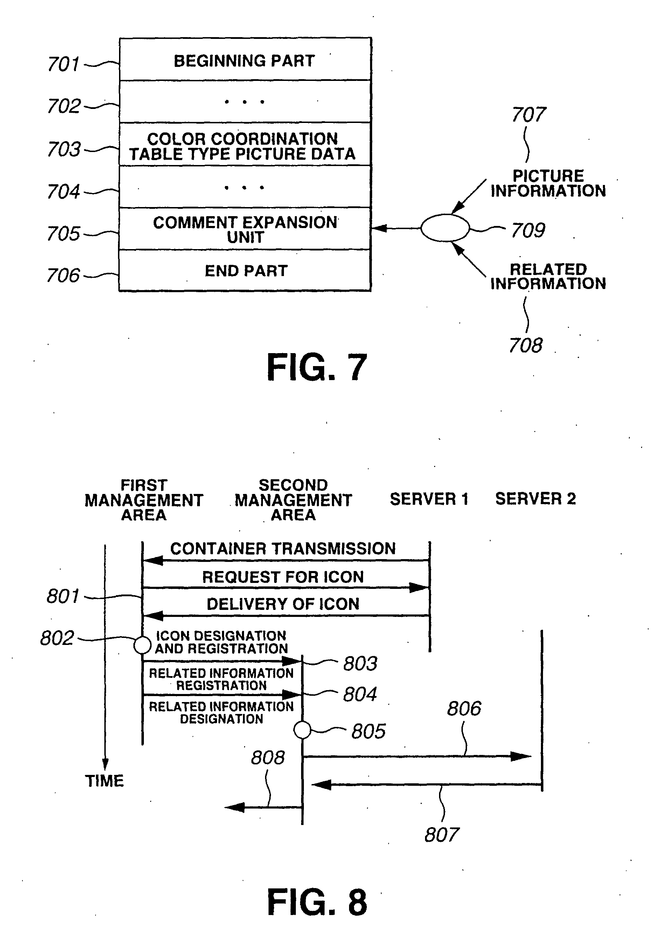

The picture information including the information, which is the common concept used in the present invention, is now explained with reference to Figs.6 and 7. The information to be included may be an identifier for specifying the related information and the picture.

Fig.6 shows a typical format of the picture information having the related information embedded therein.

Although the picture information shown herein is the GIF format picture, the picture information format is not limited to the GIF type format, but also the JPG or PCX type format.

A beginning portion 601 is a field provided for identifying the present information to be the GIF format picture information, and is comprised of a letter array "GIF" with its version.

The pixels of color coordination table type picture data 603 is picture data arranged from left to right and from top to bottom. The color coordination table type picture data are coded using an LZW algorithm which is the variable-length code.

A comment expansion unit 605 includes the sentence information which is not the graphics information in the GIF datastream. This may comprise the graphics, names of production-related parties or persons or the comments on the contents and all other items not pertinent to control or graphics data.

An end portion 606 indicates the end of the datastream and denotes that there is no other parameter information as from the end portion 606.

A interval 602 between the beginning portion 601 and the color coordination table type picture data 603 and a interval 604 between the color coordination table type picture data 603 and the comment expansion unit 605 contain the other information. To these intervals, there are allocated the information including parameters such as, for example, a picture width, a picture height or the color resolution defining the area of the display device necessary for pictures now to be drawn.

The related information 607 is arrayed in the comment expansion unit 605 directly or after encryption or the like processing to form a compact set of the picture information.

The result is that the related information or identifiers may be included in the picture information such as the datastream.

Although the above explanation is based on the GIF format, it is sufficient that the picture forms of other format type is recorded in an area distinct from the picture information.

The form of embedding in other picture information is explained with reference to Fig.7.

Fig.7 shows another typical format of the picture information having the related information embedded therein.

Here again, a picture of the GIF format is taken as an example in the picture information. In the present embodiment, the JPG or PCX system, for example, may be adopted as the format in place of the GIF format.

A beginning portion 701 is a field provided for identifying the present information to be the picture information of the GIF format. To this field is allocated the letter string "GIF" and its version.

In the color coordination table type picture data 703, the picture data comprised of pixels arranged from left to right and from top to bottom are to be arranged. Here, the picture information 707 and the related information 708 are made to co-exist in a watermark system and are mixed together at mix 709 so that the related information cannot be directly viewed but the picture information can be directly viewed. The information, thus mixed at mix 709, is encoded using an LZW algorithm of the variable length code.

The comment expansion unit 705 includes the sentence information that cannot become the graphic information in the GIF datastream. Although the comment expansion unit 705 is not particularly required in the present embodiment, it can be used as necessary by the information provider by free definition.

The end portion 706 indicates that the datastream has come to a close without being followed by other information, such as parameter information.

In a interval 702 between the beginning portion 701 and the color coordination table type picture data 703 and in a interval 704 between the color coordination table type picture data 703 and the comment expansion unit 705, there is arrayed the other information. For example, the information including the parameters defining the area of the display device necessary for a picture to be now drawn, such as picture width, picture height or color resolution is arrayed.

Although the GIF format is used in the present typical pictures, any other suitable format picture system may be used, provided that it is recorded in an area distinct from the picture information.

### (3. Graphic image displayed in a display terminal)

Referring to Figs.2 to 5, typical graphic images displayed on a display terminal pertinent to the present invention is explained.

### (3-1 Typical graphic image proper for a computer)

First, if the present invention is applied to a computer supporting an OS capable of graphical display, such as Windows 9x, Windows NT, Windows 2000 or Linux, the "look and feel" as shown in Fig.2 is desirable. This will hereinafter be explained.

A display screen 201 operates to permit a human being to visually grasp the information from a display apparatus, such as a Braun tube display surface, TFT liquid crystal screen, or a screen of a display unit built into spectacles carried by the human being. Although the boundary portion of the display screen 201 is the outermost rim of the display device, the frame may also be displayed in the display device.

A one-touch window 204 is a window which displays at least icons 205, 206 (or picture information, such as photographs, hereinafter the same). If the viewer of the present information display apparatus specifies the icons 205, 206 by operating means, not shown, at least one related information is displayed in the one-touch window so that a certain processing is booted based on this displayed information. If there are plural information, one of these is selected so that a certain processing is booted based on this selected information. That is, the one-touch window 204 on the display screen 201 acts as a particular management area for guiding the specified operation, with these icons 205, 206 as clues, so that the viewer is able to realize a new operation with the icon(s) displayed in this area as a clue.

An information providing window 202 is a frame which displays at least an icon 203. If the viewer of the present information display apparatus has specified the icon displayed in the frame, a new icon is added to the one-touch window 204 based on this icon specifying operation.

It should be noted that the icon added at this time in the one-touch window 204 may be the icon specified and displayed in the information providing window 202 or may be replaced by another icon as necessary. In the information providing window 202, there may be displayed the letter information 207 in addition to the icons. That is, the information providing window 202 on the display screen 201 operates as a special management area in which icons etc are displayed to stimulate the viewer's interest and also in which the viewer is able to perform the operation of specifying the icon to lead to registration on the one-touch window 204.

Meanwhile, if, as to a particular operation by the viewer of the main display, a pointing device, such as a mouse, is provided in the operating means, a user interface technique of so-called drag and drop of specifying an icon desired to be registered by a pointer and moving the icon on the one-touch window 204 to drop it there may be used (208).

The use of this user interface is favorable if the Internet Explorer or the Network Navigator is used as the information providing window 202.

### (3-2. Another graphic image convenient for a computer)

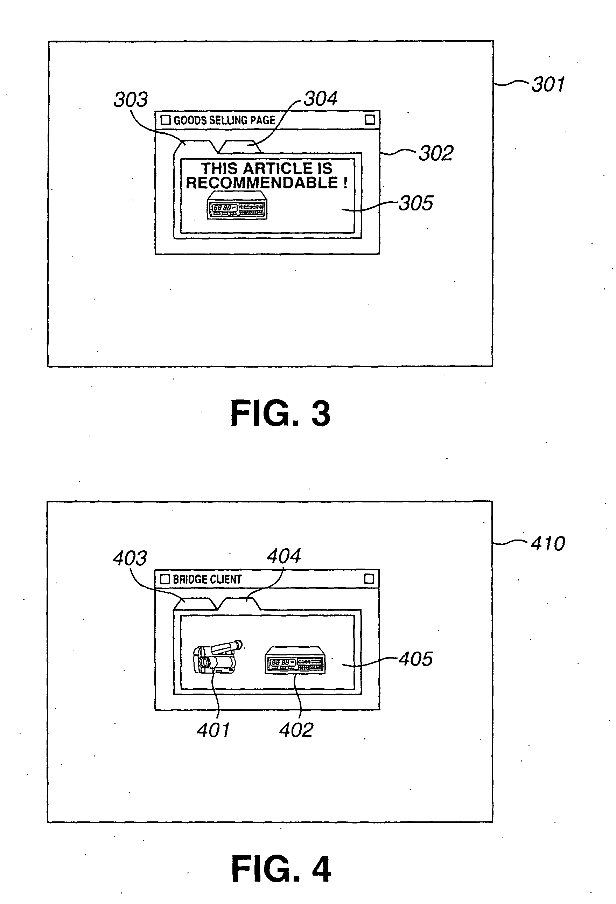

As another typical interface, such a window shown in Figs.3 and 4 may be used.

It is noted that display screens 301, 410 operate such as to permit the human being to visually grasp the information from a display device, such as a screen in a display apparatus, having a Braun tube display surface, a TFT liquid crystal screen or a screen in a display device built into spectacles carried by the human being.

An information display registration window 302 operates as an interface to permit an operator to display and register the icons obtained from the information provider.

An information providing tab 303 is an interfacing element for selecting a management area provided within an information display registration window 302. If the information providing tab 303 is activated, an icon sent from the information provider can be displayed in a first.management area 305. If a viewer of the present display apparatus specifies the icon displayed here, a new icon is added to a second management area displayed when a one-touch tab 304 is activated.

The one-touch tab 304 is an interfacing element for selecting a management area provided within the information display registration window 302. If the one-touch tab 304 is activated, it displays the second management area to enable a new icon related therewith to be displayed in a second management area 405. If the viewer of the present information display apparatus has specified the icon displayed here by operating means, not shown, at least one related information based on this information is displayed (one or more related information is selected and displayed should there be plural related information) to boot a certain processing corresponding to the selected information. That is, the second management area 405 operates as a management area for guiding a specified operation, with the icons 401, 402 as a clue, so that the viewer is able to realize a new operation with the icon displayed in this area as a clue.

If this user interface is used, the information display registration processing can be meritoriously completed within a small display area in case the area of the display screens 301, 401 are small or if the resolution of the screen is low.

### (3-3. Another typical graphic image proper for digital television or PDA)

If the present invention is applied to a digital television or to a portable terminal, such as PDA (Personal Data Assistance), "look and feel", such as is shown in Fig.5, is desirably employed. This "look and feel" is now explained.

A display screen 501 operates such as to permit the human being to visually comprehend the information from a display device, such as a Braun tube display surface, a TFT liquid crystal screen or a screen in a display device built in the spectacles carried by the human being. Although the boundary portion of the display screen 501 is the outermost rim of the display device, the frame may also be displayed in the display device.

A one-touch frame 502 operates similarly to the one-touch window for displaying at least an icon 508 (or a picture information such as a photo information, hereinafter the same). If the viewer of the present information display device designates an icon 508 by operating means, not shown, the one-touch frame 502 displays at least one related information to boot a certain processing based on this information. If there are plural related information, these are selected to boot a certain processing corresponding to the selected information. That is, this one-touch frame 502 operates as a special management area in which the viewer is able to realize a new operation with the icon displayed in this area as a clue.

An information providing frame 503 operates similarly to the information providing window and is a frame for displaying at least icons 505, 507. If a viewer of the present display apparatus specifies the icon displayed within this frame, a new icon is added to the one-touch frame 502 based on this operation.

It should be noted that the icon added at this time may be the icon specified and displayed in the information providing frame 503 or may be replaced by another icon as necessary. In the information providing frame 503, there may be displayed the letter information 507 in addition to the icons.

That is, the information providing frame 503 on the display screen 501 operates as a special management area in which icons etc are displayed to stimulate the viewer's interest and also in which the viewer is able to perform the operation of specifying the icon to lead to registration on the one-touch frame 502.

Meanwhile, if, as to a particular operation by the viewer of the main display, a pointing device, such as a mouse, is provided in the operating means, a user interface technique of so-called drag and drop of specifying an icon desired to be registered by a pointer and moving the icon on the one-touch frame 502 to drop it there may be used.

An information display surface 504 is a frame which displays the content, such as movie in digital broadcast, and is an area utilized by the viewer to display the information desired to be acquired. Meanwhile, the content means the totality of the information stimulating the human visual system for information transmission, such as still picture or teletext information, without being limited to the moving pictures.

### (4. Relation between common servers and clients)

The relationship between the server and the client, common as an infrastructure in the present invention, is hereinafter explained.

A server 101 is an apparatus providing the picture information responsive to a request for acquiring it from a client 103 operating as an information display apparatus.

The client 103 is an information displaying apparatus connected to the server 101 over a network and within which a first management area 104 and a second management area 105 having respective different functions may be in operation.

The first management area 104 is adapted for displaying the picture acquired from the server 101 and corresponds to the information providing windows 202, 302 and to the information providing frame 503.

If a particular icon is specified in the first management area, the second management area 105 registers and displays its contents. If the viewer of the present information display device designates an icon displayed there by operating means, not shown, the second management area 105 displays at least one related information to boot a certain processing based on this information. If there are plural related information, these are selected to boot a certain processing corresponding to the selected information. The second management area 105 corresponds to the one-touch windows 204, 405 and to the one-touch frame 502 in the aforementioned graphic image.

The server 102 is connected to the client 103 over a network to provide the requested information under control by the second management area 105.

Although the servers 101, 102 are stated here as being different entities, these may, of course, be one entity depending on the properties of the information provided or the structural specifications of the server.

### (5. Communication of the related information between the first and second management areas)

The related information, for example, is communicated between the first and second management areas, as will be explained subsequently. In general, the technique for realization of the process-to-process or sled-to-sled communication may be broadly variable. For example, a controller controlling two areas may communicate using a common memory space. If a new distinct process is formulated and communication is had with this process, data communication may be realized between the first and second management areas.

In particular, if the Windows by Microsoft Inc. is being used as an OS and the Internet Explorer is used for controlling the first management area, the COM (component object model) may be used for simplicity.

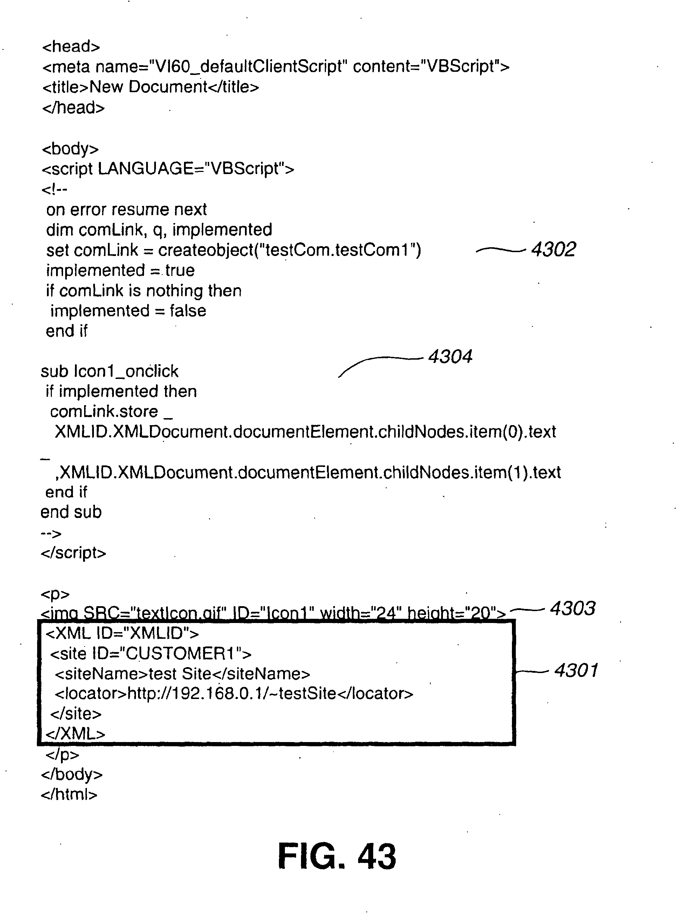

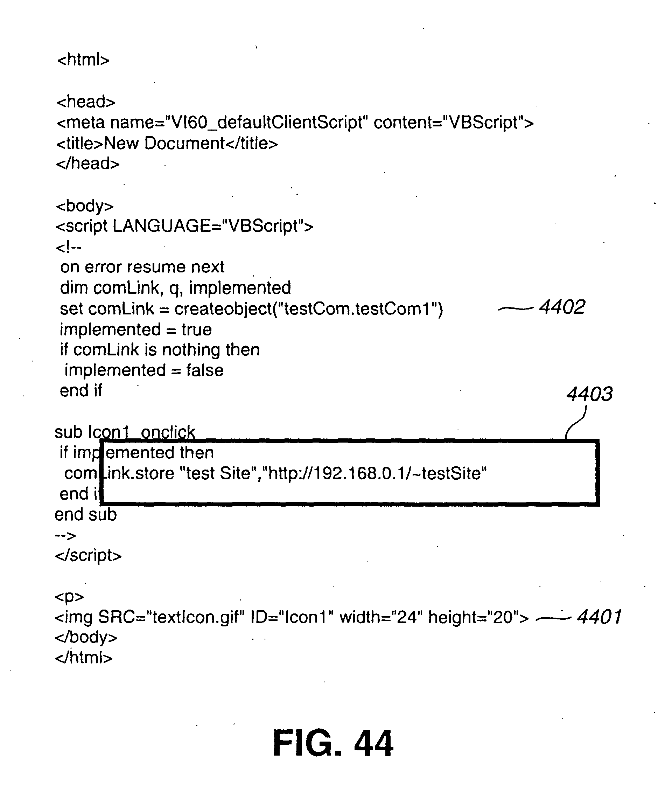

The case of employing the COM is explained by referring to Figs.43, 44. In the case of the COM, it is possible to generate a specified object from a process to use the method of this object. If an entity realizing the communication as this object, it is possible to realize communication between plural processes.

### (5-1. Communication in case the related information is included in an XML island)

Fig.43 shows an information container including the related information using the XML (eXtended Markup Language).

This information container is prepared in the form of the so-called HTML and includes a tag 4303 for specifying the information to be displayed and an XML island 4301 as the related information.

The information container is adapted for opening the COM when read-in by the Internet Explorer by a script (4302) since there is also a tag 4303 for picture display, the related picture information is requested to the server to acquire and display the information. If an operator single-clicks the picture information, the Internet Explorer generates an event to execute the program pertinent to this tag. Since the event is accepted in this embodiment by a sub-routine 4304, the method "store" as the method of the previously opened COM is booted to enable the information of the XML island 4301 to be transferred to the COM as the object for communication. Here, the site name and its URL are included and can be transferred.

The transferred related information can be placed under control by the second management area by a similar mechanism.

Meanwhile, the picture information can similarly be transferred through COM or, if the OS is the Windows, using the OLE drag-and-drip function.

### (5-2. Communication in case the related information is included in a program)

Fig.44 shows an embodiment of the information container including the related information as the program.

This information container is also formed in accordance with the so-called HTML form, and includes a tag 4401 for specifying the picture to be displayed and the information 4403 for directly sending the related information to the COM. When the Internet Explorer reads-in the information container, by a script, the information container opens the COM (4402). Moreover, since there is the tag 4401 for picture display, the related picture information is requested from the server to acquire and display the so-requested information.

If the operator single-clicks the picture information, the Internet Explorer generates an event to execute the program pertinent to this tag. Since the event is accepted in the present embodiment by the sub-routine 4403, the "store", which is the method of the previously opened COM, is booted, whereby the related information stated as its argument may be transferred to the COM as the object for communication. The so-transferred related information can be placed under control by the second management area by a similar mechanism. Meanwhile, the picture information can similarly be transferred through COM or, if the OS is the Windows, using the OLE drag-and-drop function.

### (6. First Embodiment)

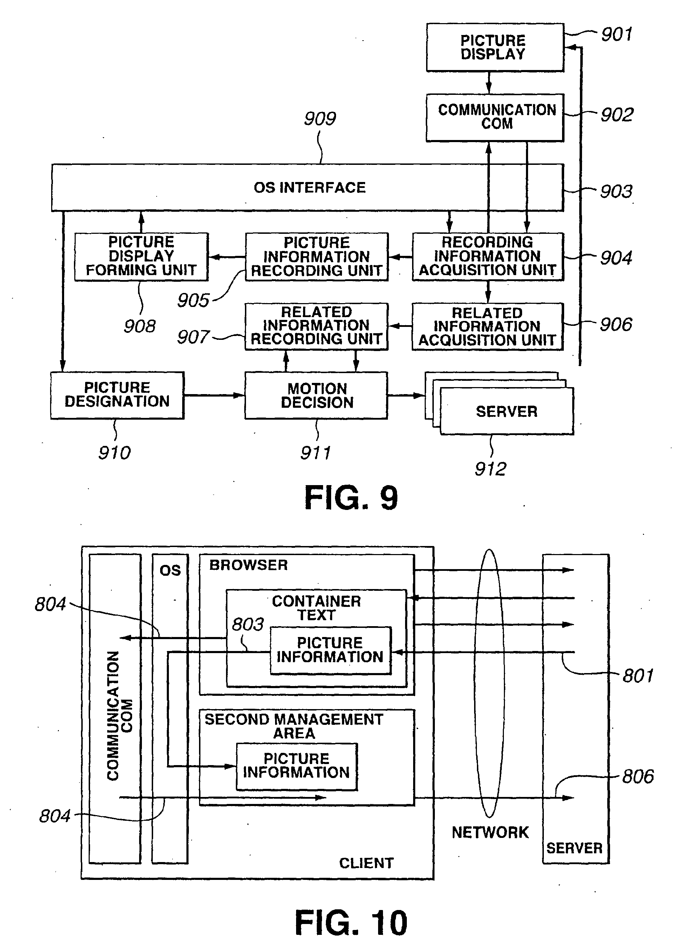

Referring to Figs.8 and 9, a first embodiment of the present invention is explained.

### (6-1. Typical operating sequence in the first embodiment)

A typical operating sequence in the first embodiment is explained with reference to Fig.8.

In the present embodiment, if, after displaying a picture in the first management area (801) in accordance with the icon and the container provided by the information provider, an icon is specified by an operator and registered (802), the icon is transferred from the first management area to the second management area (803), at the same time as the related information included in the container is registered (804). As the operator specifies the icon placed in the second management area or selects at least one of plural related information, if there is such plural related information (805), the information is requested from the server corresponding to the related information (806) to receive the information (807). The information so requested is displayed on the information displaying terminal. Of course, if the related information indicates not the display of the information but the program actuation, it suffices to execute the information without requesting the information from the server.

### (6-2. Typical structure of the first embodiment)

Referring to Fig.9, an illustrative structure on the client side in this configuration is explained.

A picture display unit 901 is a browser, such as the Internet Explorer, and operates as the first management area. That is, the picture display unit 901 acquires data from a server 912 to display the letters or the picture. If one of the displayed pictures is selected and a preset operation is made, the related information and the picture information can be transferred to the communication COM.

If it is detected that an icon has been specified by an operator from operating means in the picture display unit 901, an event is notified through an OS interface 909. As a consequence, a recording information acquisition unit 904 acquires the picture information pertinent to the icon and the related information through a communication COM 902.

A picture information recording unit 905 is connected to the recording information acquisition unit 904 and is adapted for storing the picture information acquired by the recording information acquisition unit 904 either directly or subject to preset code conversion. The so-recorded picture information is furnished to a picture display forming unit 908 so that the recorded picture information will be displayed in the one-touch frame 502 and in the one-touch window 204, as the second management area. The one-touch frame 502 and the one-touch window 204 are collectively referred to below as a one-touch frame.

The picture display forming unit 908 is connected to the picture information recording unit 905 to perform control so that the icon recorded in the picture information recording unit will be displayed in the one-touch frame.

If the operator has specified the icon displayed in the one-touch frame through operating means, a picture specifying unit 910 makes an inquiry at a related information recording unit 907, as later explained, so that the operation can be initiated based on the related information corresponding to the so-specified icon. If there are plural related information, it suffices to perform control to cause the candidates for selection to be displayed to permit the operator to select one of the related information. The operator may select the related information to enable the operation to be started based on the selected related information. If the related information is comprised of the single information, it is of course possible to get its contents confirmed to initiate the operation based on the related information.

A related information acquisition unit 906 is connected to the recording information acquisition unit 904, so that, in case a notification is made from the OS interfacing unit 909 for performing the processing pertinent to the icon, the related information acquisition unit 906 is able to acquire the picture information, so acquired, to extract the related information included in the picture information.

The related information recording unit 907 is connected to the related information acquisition unit 906 and to an operation decision unit 911 to record the related information extracted in the operation decision unit 911 along with the pertinence relation information with respect to the icon. When it is informed by the picture specifying unit 910 that the icon has been specified, the related information recording unit 907 notifies the operation decision unit 911 as to the related information pertinent to the icon in question.

When commanded by the picture specifying unit, the operation decision unit 911 decides which of the related information pertinent to the specified icon has been selected, to proceed to process the contents. If the connection to a particular server 912 is commanded, the related information is accessed over the network.

### (7. Second embodiment of the invention)

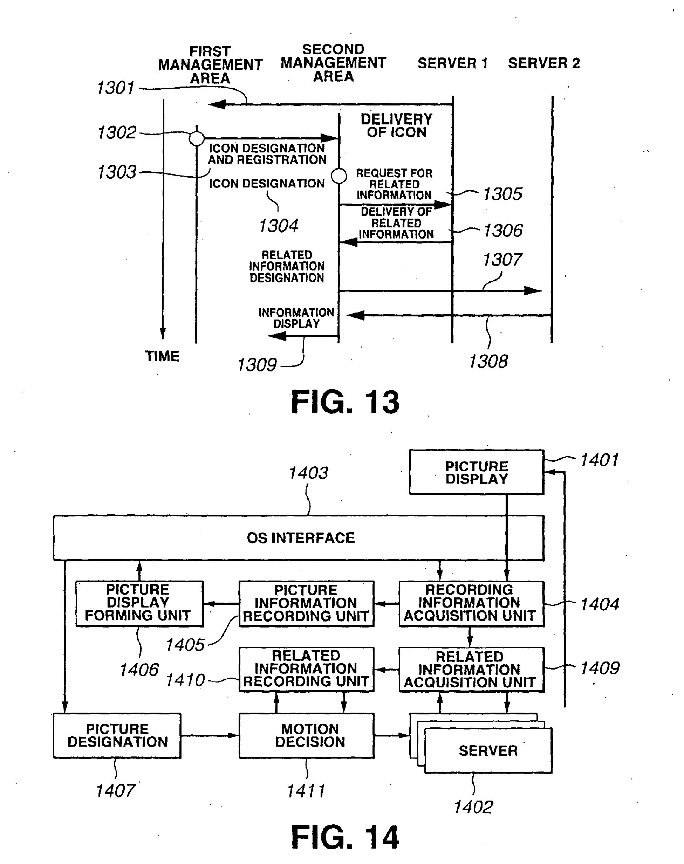

A second embodiment of the present invention is now explained with reference to Figs.13 and 14.

### (7-1. Typical operation in the second embodiment)

A typical operating sequence is explained with reference to Fig.13.

In the present embodiment, if, after displaying a picture in the first management area in accordance with the icon and the container supplied by the information provider (1301), the icon is identified by an operator and registered (1302), the icon in question is transferred from the first management area to the second management area (1303) so that the icon is displayed in the second management area.

If the operator identifies the icon placed in the second management area (1304), providing of the related information is requested to the server (1305). The server in response thereto provides the related information (1306) to display it. If there are plural related information, at least one of them is selected and the information is requested to the server pertinent to this related information (1307) and the information so requested is received (1308). The information so requested is displayed in an information display terminal (1309). Of course, if the related information indicates not the information display but the program running, it is sufficient to execute the program without requesting the information from the server.

### (7-2. Typical structure in the second embodiment)

A typical structure of the second embodiment of the invention is shown in Fig.14. The functions of the various components are similar to those of the typical structure of the first embodiment described above.

A picture display unit 1401 is e.g., a browser such as the Internet Explorer and operates as the first management area. That is, the picture display unit 1401 acquires data from the server 1402 to display the text or the picture. The picture display unit 1401 is also able to transfer the picture information to a recording information acquisition unit 1404 through an OS interface 1403 when one of the displayed pictures is selected to perform a preset operation.

If, in the picture display unit 1401, it is detected that an operator has specified an icon from operating means, an event is notified through the OS interface 1403. At this time, the recording information acquisition unit 1404 is able to acquire the picture information pertinent to the icon through the OS interface 1403.

A picture information recording unit 1405 is connected to the recording information acquisition unit 1404 to memorize the picture information acquired by the recording information acquisition unit 1404 either directly or subject to preset code conversion. The picture information recording unit 1405 is also configured for supplying the picture information to a picture display forming unit 1406 so that the recorded picture information will be displayed in the one-touch frame as the second management area.

The picture display forming unit 1406 is connected to the picture information recording unit 1405 and manages control to display the icon recorded in the information recording unit 1405 in the one-touch frame.

When the operator has specified the icon displayed on the one-touch frame through operating means, a picture specifying unit 1407 makes an inquiry at a related information recording unit 1408, as later explained, to initiate a corresponding operation, in such a manner that the operation can be initiated based on the related information corresponding to the so-specified icon. The picture specifying unit 1407 also acquires the related information to initiate the corresponding operation. If there are plural related information, it suffices to perform control to cause the candidates for selection to be displayed to permit the operator to select one of the related information. The operator may select the related information to enable the operation to be started based on the selected related information. Of course, if the related information is comprised of the single information, it is possible to permit the operation to be initiated on the basis of the related information after confirming the information contents.

A related information acquisition unit 1409 is connected to the recording information acquisition unit 1404. When the picture specifying unit 1407 is advised from the OS interface 1403 that the processing pertinent to the icon is to be performed, the related information acquisition unit 1409 makes a request again to the server 1402 to acquire the related information and acquires it to extract the related information.

A related information recording unit 1410 is connected to the recording information acquisition unit 1404 and to an operation decision unit 1411 and is configured for recording the related information extracted in the related information acquisition unit 1409 along with the pertinence relation information with respect to the icon. When advised from the picture specifying unit 1407 to the effect that the icon has been identified, the related information pertinent to the picture specifying unit 1407 is advised to the operation decision unit 1411.

The operation decision unit 1411 decides, under a command from the picture specifying unit 1407, which of the related information pertinent to the specified icon has been selected to process the contents. If connection is to be made to a particular server 1402, the related information is accessed over a network.

### (8. Third embodiment)

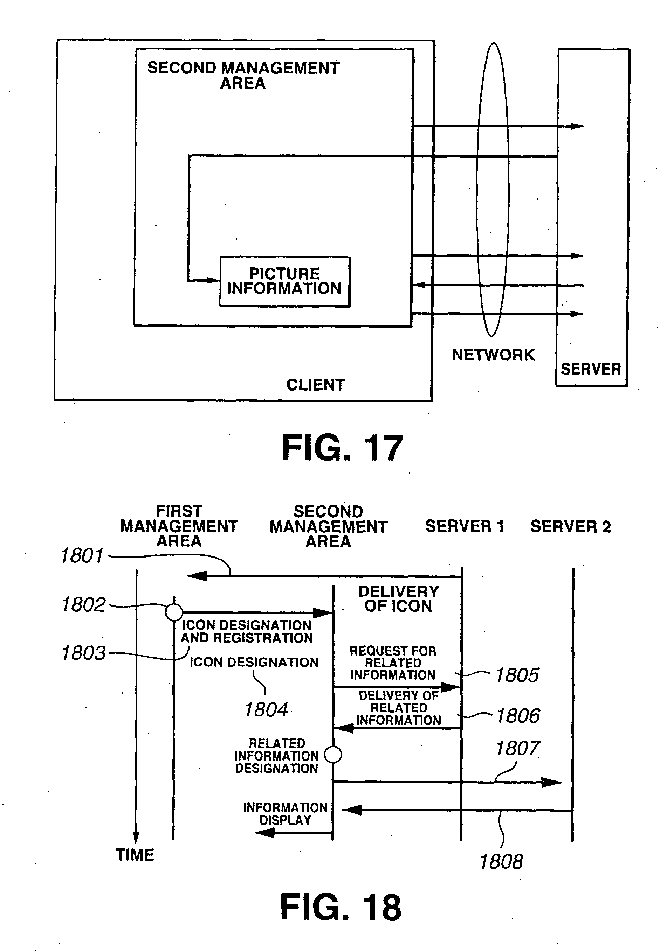

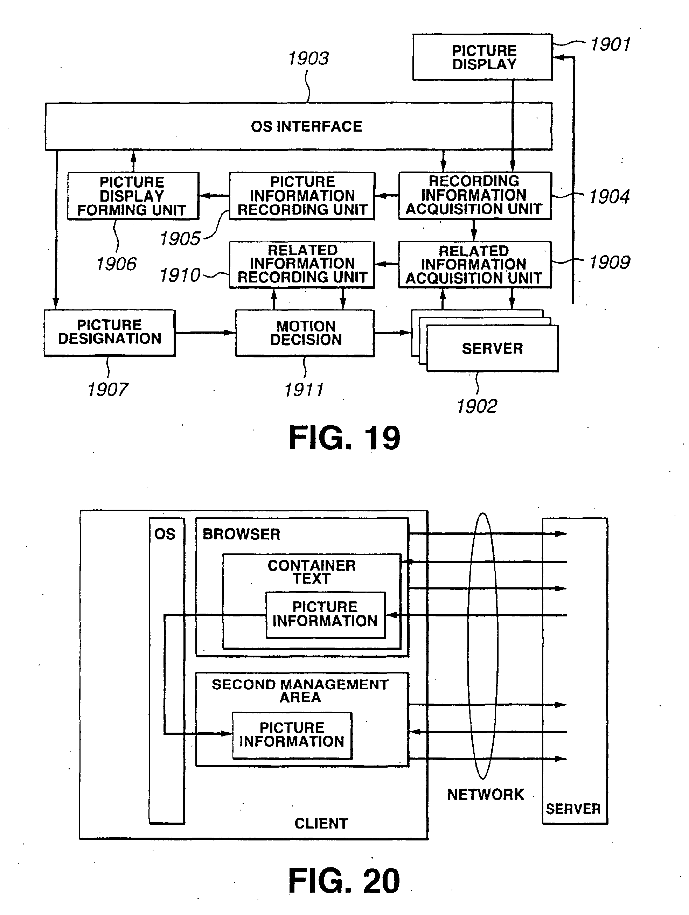

A third embodiment of the invention is hereinafter explained with reference to Figs.18 and 19.

### (8-1. Typical operation in the third embodiment)

A typical operating sequence is explained with reference to Fig.18.

In the present embodiment, if, after a picture is displayed in the first management area (1801) in accordance with the icon and the container furnished by the information provider, an icon is identified by the operator and registered (1802), the icon is transferred (1809) from the first management area to the second management area (1803) so as to be displayed in the second management area. The processing then transfers to requesting the related information from the server in the second management area (1805). The server accordingly furnishes the related information (1806) to display the so-furnished information.

When the icon placed in the second management area is specified (1804) by the operator, processing is carried out based on the related information corresponding to the icon. If there are plural related information, at least one of them is selected and the information is requested from the server corresponding to this related information (1807) and is received (1808). The information requested is displayed on the information display terminal. Of course, if the related information indicates not the information display but the program running, it is sufficient to execute the program without requesting the information from the server.

### (8-2. Typical structure in the third embodiment)

A typical structure of the second embodiment of the invention is shown in Fig.19. The functions of the various components are similar to those of the typical structure of the first embodiment described above.

A picture display unit 1901 is e.g., a browser such as the Internet Explorer and operates as the first management area. That is, the picture display unit 1901 acquires data from the server 1902 to display the text or the picture. The picture display unit 1901 is also able to transfer the picture information to a recording information acquisition unit through an OS interface 1903 when one of the displayed pictures is selected to perform a preset operation.

If, in the picture display unit 1901, it is detected that an operator has specified an icon from operating means, an event is notified through the OS interface 1903. At this time, the recording information acquisition unit 1904 is able to acquire the picture information pertinent to the icon through the OS interface 1903.

A picture information recording unit 1905 is connected to the recording information acquisition unit 1904 to memorize the picture information acquired by the recording information acquisition unit 1904 either directly or subject to preset code conversion. The picture information recording unit 1905 is also configured for supplying the picture information to a picture display forming unit 1906 so that the recorded picture information will be displayed in the one-touch frame as the second management area.

The picture display forming unit 1906 is connected to the picture information recording unit 1905 and manages control to display the icon recorded in the information recording unit 1905 in the one-touch frame.

When the operator has specified the icon displayed on the one-touch frame through operating means, a picture specifying unit 1907 makes an inquiry at a related information recording unit 1910, as later explained, to initiate a corresponding operation, in such a manner that the operation can be initiated based on the related information corresponding to the so-specified icon. The picture specifying unit also acquires the related information to initiate the corresponding operation. If there are plural related information, it suffices to perform control to cause the candidates for selection to be displayed to permit the operator to select one of the related information. The operator may select the related information to enable the operation to be started based on the selected related information. Of course, if the related information is comprised of the single information, it is possible to permit the operation to be initiated on the basis of the related information after confirming the information contents.

A related information acquisition unit 1909 is connected to the recording information acquisition unit 1904. When the picture specifying unit 1907 is advised from the OS interface 1903 that the processing pertinent to the icon is to be performed, the related information acquisition unit 1909 makes a request again to the server 1902 to acquire the related information and acquires it to extract the related information.

A related information recording unit 1910 is connected to the recording information acquisition unit 1904 and to an operation decision unit 1911 and is configured for recording the related information extracted in the related information acquisition unit 1909 along with the pertinence relation information with respect to the icon. When advised from the picture specifying unit 1907 to the effect that the icon has been identified, the related information pertinent to the picture specifying unit 1907 is advised to the operation decision unit 1911.

The operation decision unit 1911 decides, under a command from the picture specifying unit 1907, which of the related information pertinent to the specified icon has been selected to process the contents. If connection is to be made to a particular server 1902, the related information is accessed over a network.

### (9. Fourth embodiment)

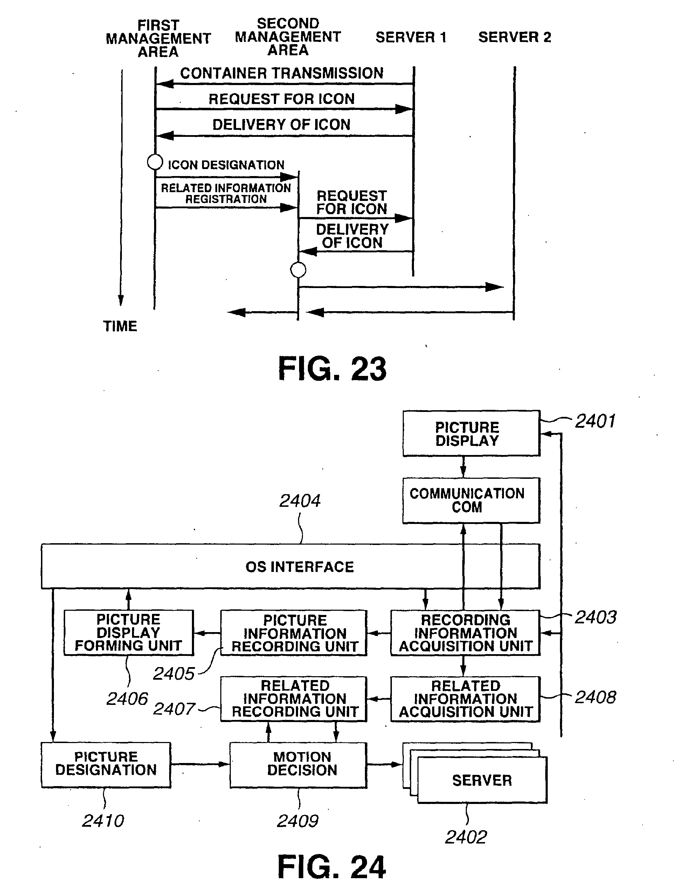

A fourth embodiment of the invention is hereinafter explained with reference to Figs.23 and 24.

### (9-1. Typical operation in the fourth embodiment)

A typical operating sequence is explained with reference to Fig.23.

In the present embodiment, if, after a picture is displayed in the first management area in accordance with the icon and the container furnished by the information provider, an icon is identified by the operator and registered, the icon is transferred from the first management area to the second management area so as to be displayed in the second management area. Meanwhile, it is sufficient to transfer an identifier pertinent to the picture information without it being necessary to transfer the icon picture information itself. The identifier is designed to specify the icon using e.g., the GUID (globally unique identifier). If the information is included in an icon, the identifier including the information may also be transferred.

The related information pertinent to the icon, included in the information container, is also transferred, along with the icon, to the second management area. Specifically, the related information is recorded in the picture information recording unit, which will be explained subsequently.

The control of the second management area now transfers to again requesting the providing of an icon to the server, which is responsive thereto to furnish an icon. The second management area displays the newly acquired icon in place of the icon transferred as described above.

When the operator has identified the icon placed in the second management area, processing is carried out based on the related information corresponding to the icon. If there are plural related information, at least one of them is selected and the information is requested from the server corresponding to this related information and is received. The information requested is displayed on the information display terminal. Of course, if the related information indicates not the information display but the program running, it is sufficient to execute the program without requesting the information from the server.

By the above-described structure, it is possible for a server to offer services such as stake. To one sort of icon and to the other sort of icon are assigned hit and miss, respectively, and the hit-or-miss game may be played by performing a specified operation in the first management area. By providing such icon, another pastime may be afforded to the viewer in addition to the operation.

### (9-2. Typical structure in the fourth embodiment)

A typical structure of the fourth embodiment of the invention is shown in Fig.24.

A picture display unit is a browser, such as the Internet Explorer, and operates as the first management area. That is, the picture display unit 2401 acquires data from a server 2402 to display the letters or the picture. If one of the displayed pictures is selected and a preset operation is made, the related information and the picture information can be transferred to the communication COM or to the OLE mechanism of the Windows.

If it is detected that an icon has been specified by an operator from operating means in the picture display unit 2401, an event is notified through an OS interface 2409. As a result, a recording information acquisition unit 2403 acquires the picture information pertinent to the icon and the related information through a communication COM or OLE mechanism of the Windows. A request for acquisition is made to the server as to the picture information pertinent to the icon. The picture information acquired with respect to the request is transferred to the picture information recording unit 2405.

A picture information recording unit 2405 is connected to the recording information acquisition unit 2403 and is adapted for storing the picture information acquired by the recording information acquisition unit 2403 either directly or subject to preset code conversion. The so-recorded picture information is furnished to a picture display forming unit 2406 so that the recorded picture information will be displayed in the one-touch frame and in the one-touch frame, as the second management area.

The picture display forming unit 2406 is connected to the picture information recording unit 2405 to perform control so that the icon recorded in the picture information recording unit will be displayed in the one-touch frame.

If the operator has specified the icon displayed in the one-touch frame through operating means, a picture specifying unit 2410 makes an inquiry at a related information recording unit 2407, as later explained, so that the operation can be initiated based on the related information corresponding to the so-specified icon. The picture specifying unit also acquires the related information to initiate the corresponding operation. If there are plural related information, it suffices to perform control to cause the candidates for selection to be displayed to permit the operator to select one of the related information. The operator may select the related information to enable the operation to be started based on the selected related information. If the related information is comprised of the single information, it is of course possible to get its contents confirmed to initiate the operation based on the related information.

A related information acquisition unit 2408 is connected to the recording information acquisition unit 2403, so that, in case a notification is made from the OS interfacing unit 2404 for performing the processing pertinent to the icon, the related information acquisition unit 2408 is able to acquire the picture information, so acquired, to extract the related information included in the picture information.

The related information recording unit 2407 is connected to the related information acquisition unit 2408 and to an operation decision unit 2409 to record the related information extracted in the related information acquisition unit 2408 along with the pertinence relation information with respect to the icon. When informed by the picture specifying unit 2410 that the icon has been specified, the related information recording unit notifies the related information pertinent to the icon in question to the operation decision unit.

When commanded by the picture specifying unit 2410, the operation decision unit 2409 decides which of the related information pertinent to the specified icon has been selected, to proceed to processing the contents. If the connection to a particular server is commanded, the related information is accessed over the network.

### (10. Fifth embodiment of the invention)

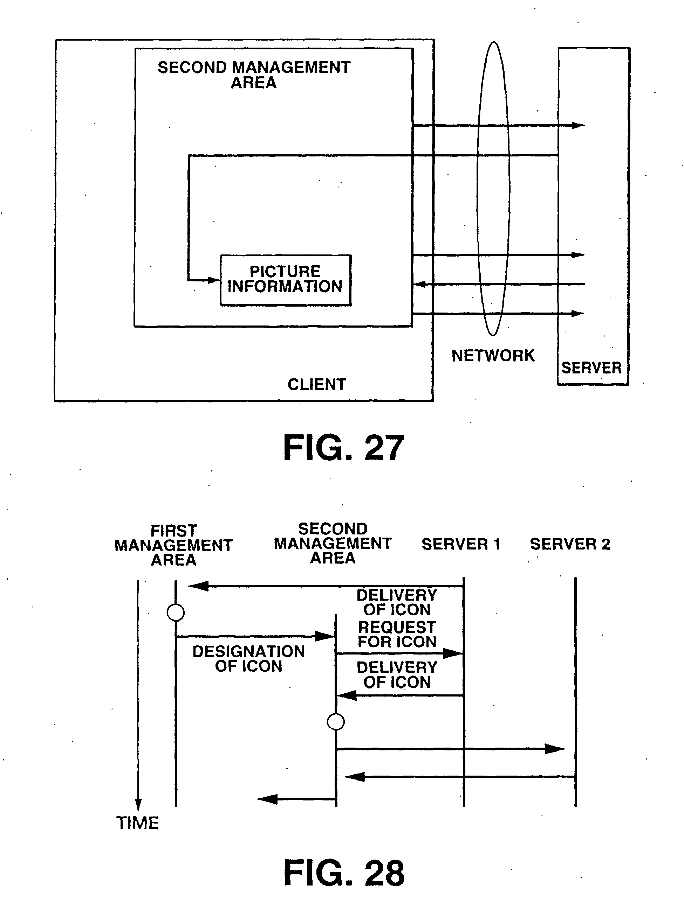

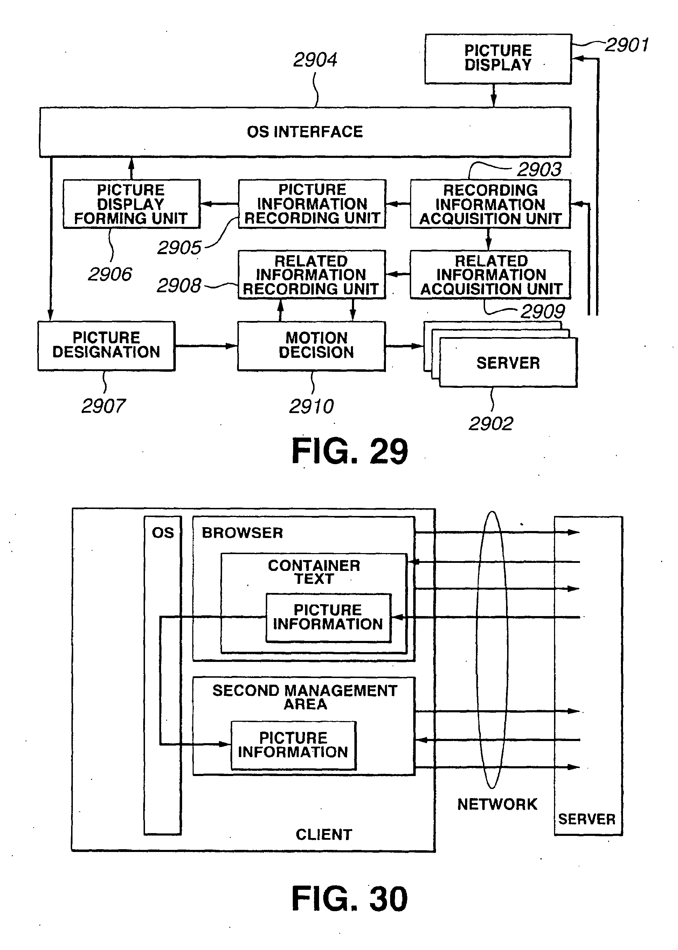

A fifth embodiment of the present invention is now explained with reference to Figs.28 and 29.

### (10-1. Typical operation in the fifth embodiment)

A typical operating sequence in the fifth embodiment is explained with reference to Fig.28.

In the present embodiment, if, after displaying a picture in the first management area in accordance with the icon and the container supplied by the information provider, the icon is identified by an operator and registered, the icon in question is transferred from the first management area to the second management area so that the icon is displayed in the second management area. Meanwhile, it is sufficient to transfer an identifier pertinent to the picture information without it being necessary to transfer the icon picture information itself. The identifier is designed to specify the icon using e.g., the GUID (globally unique identifier). If the information is included in an icon, the identifier including the information may also be transferred.

The control of the second management area now transfers to again requesting the providing of an icon to the server, which then is responsive thereto to furnish an icon. The second management area displays the newly acquired icon in place of the icon transferred as described above.

When the operator has identified the icon placed in the second management area, processing is carried out based on the related information corresponding to the icon. If there are plural related information, at least one of them is selected and the information is requested from the server corresponding to this related information and is received. The information requested is displayed on the information display terminal. Of course, if the related information indicates not the information display but the program running, it is sufficient to execute the program without requesting the information from the server.

By the above-described structure, it is possible for a server to offer services such as stake. To one sort of icon and to the other sort of icon are assigned hit and miss, respectively, and the hit-or-miss game may be played by performing a specified operation in the first management area. By providing such icon, another pastime may be afforded to the viewer in addition to the operation.

### (10-2. Typical structure in the fifth embodiment)

A typical structure of the fifth embodiment of the invention is shown in Fig.29.

A picture display unit is a browser, such as the Internet Explorer, and operates as the first management area. That is, the picture display unit 2901 acquires data from a server 2902 to display the letters or the picture. If one of the displayed pictures is selected and a preset operation is made, the related information and the picture information can be transferred to the communication COM or to the OLE mechanism of the Windows.

If it is detected that an icon has been specified by an operator from operating means in the picture display unit 2901, an event is notified to the recording information acquisition unit 2903 through an OS interface 2904. So, a recording information acquisition unit 2903 makes a request for acquisition of an icon having the included related information to the server 2902 to acquire the icon.

A picture information recording unit 2906 is connected to the recording information acquisition unit 2903 and is adapted for storing the picture information acquired by the recording information acquisition unit 2903 either directly or after preset code conversion. The so-recorded picture information is furnished to a picture display forming unit 2906 so that the recorded picture information will be displayed in the one-touch frame as the second management area.

The picture display forming unit 2906 is connected to the picture information recording unit 2905 to perform control so that the icon recorded in the picture information recording unit will be displayed in the one-touch frame.

If the operator has specified the icon displayed in the one-touch frame through operating means, a picture specifying unit 910 makes an inquiry at a related information recording unit 2908, as later explained, so that the operation can be initiated based on the related information corresponding to the so-specified icon. If there are plural related information, it suffices to perform control to cause the candidates for selection to be displayed to permit the operator to select one of the related information. The operator may select the related information to enable the operation to be started based on the selected related information. If the related information is comprised of the single information, it is of course possible to get its contents confirmed to initiate the operation based on the related information.

A related information acquisition unit 2909 is connected to the recording information acquisition unit 2903 to acquire the icon the recording information acquisition unit 2903 has acquired from the server 2902 to extract the related information included in the picture information.

The related information recording unit 2908 is connected to the related information acquisition unit 2909 and to an operation decision unit 2910 to record the related information extracted in the operation decision unit 2910 along with the pertinence relation information with respect to the icon. When informed by the picture specifying unit 2907 that the icon has been specified, the related information recording unit 2908 notifies the related information pertinent to the icon in question to the operation decision unit 2910.

When commanded by the picture specifying unit 2907, the operation decision unit 2910 decides which of the related information pertinent to the specified icon has been selected, to proceed to process the contents. If the connection to a particular server is commanded, the related information is accessed over the network.

### (11. Sixth embodiment of the invention)

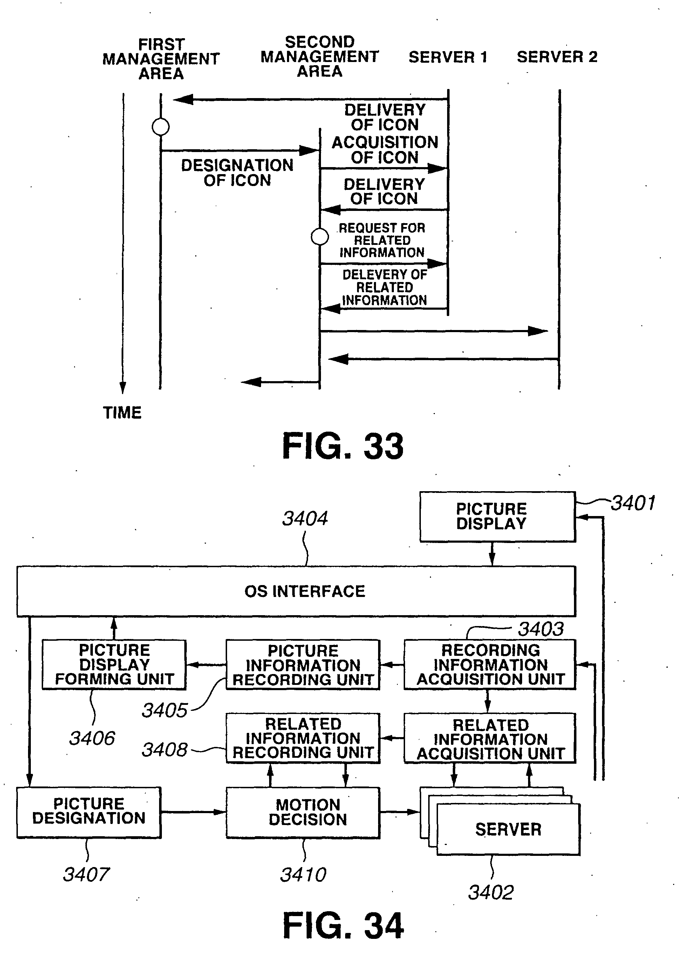

A sixth embodiment of the present invention is now explained with reference to Figs.33 and 34.

### (11-1. Typical operation in the sixth embodiment)

A typical operating sequence of the sixth embodiment is explained with reference to Fig.33.

In the present embodiment, if, after displaying a picture in the first management area in accordance with the icon and the container supplied by the information provider, the icon is identified by an operator and registered, the icon in question is transferred from the first management area to the second management area so that the icon is displayed in the second management area. Meanwhile, it is sufficient to transfer an identifier pertinent to the picture information without it being necessary to transfer the icon picture information itself. The identifier is designed to specify the icon using e.g., the GUID (Globally Unique Identifier). If the information is included in an icon, the identifier including the information may also be transferred.

The control of the second management area now transfers to again requesting the providing of an icon to the server, which then is responsive thereto to furnish an icon. The second management area displays the newly acquired icon in place of the icon transferred as described above.

When the operator has identified the icon placed in the second management area, processing is carried out based on the related information corresponding to the icon. If there are plural related information, at least one of them is selected and the information is requested from the server corresponding to this related information and is received. The information requested is displayed on the information display terminal. Of course, if the related information indicates not the information display but the program running, it is sufficient to execute the program without requesting the information from the server.

By the above-described structure, it is possible for a server to offer services such as stake. Since the related information is acquired by the operator when making a request for connection to the server 2, it is possible to cope with frequent change of the related information.

### (11-2. Typical structure in the sixth embodiment)

A typical structure of the sixth embodiment of the invention is shown in Fig.34.

A picture display unit is a browser, such as the Internet Explorer, and operates as the first management area. That is, the picture display unit 3401 acquires data from a server 3402 to display the text or the picture.

If it is detected that an icon has been specified by an operator from operating means in the picture display unit 3401, an event is notified through an OS interface 3404. So, a recording information acquisition unit 3403 makes a request to the server 3402 to acquire the icon, which may thus be acquired.

A picture information recording unit 3405 is connected to the recording information acquisition unit 3403 and is adapted for storing the picture information acquired by the recording information acquisition unit 3403 either directly or after preset code conversion. The so-recorded picture information is furnished to a picture display forming unit 3406 so that the recorded picture information will be displayed in the one-touch frame as the second management area.

The picture display forming unit 3406 is connected to the picture information recording unit 3405 to perform control so that the icon recorded in the picture information recording unit will be displayed in the one-touch frame.

If the operator has specified the icon displayed in the one-touch frame through operating means, a picture specifying unit 3407 makes an inquiry at a related information recording unit 3408, as later explained, so that the operation can be initiated based on the related information corresponding to the so-specified icon. If there are plural related information, it suffices to perform control to cause the candidates for selection to be displayed to permit the operator to select one of the related information. The operator may select the related information to enable the operation to be started based on the selected related information. If the related information is comprised of the single information, it is of course possible to get its contents confirmed to initiate the operation based on the related information.

A related information acquisition unit 3409 receives a command issued when an icon for the second management area is specified from the OS interface 3404 to connect to a preset server 3402 to acquire the related information pertinent to the so-specified icon.

The related information recording unit 3408 is connected to the related information acquisition unit 3409 and to an operation decision unit 3410 to record the related information extracted in the related information acquisition unit 3409 along with the pertinence relation information with respect to the icon. When informed by the picture specifying unit 3407 that the icon has been specified, the related information recording unit 3408 notifies the related information pertinent to the icon in question to the operation decision unit.

When commanded by the picture specifying unit 3407, the operation decision unit 3410 decides which of the related information pertinent to the specified icon has been selected, to proceed to process the contents. If the connection to a particular server is commanded, the related information is accessed over the network.

### (12. Seventh embodiment of the invention)

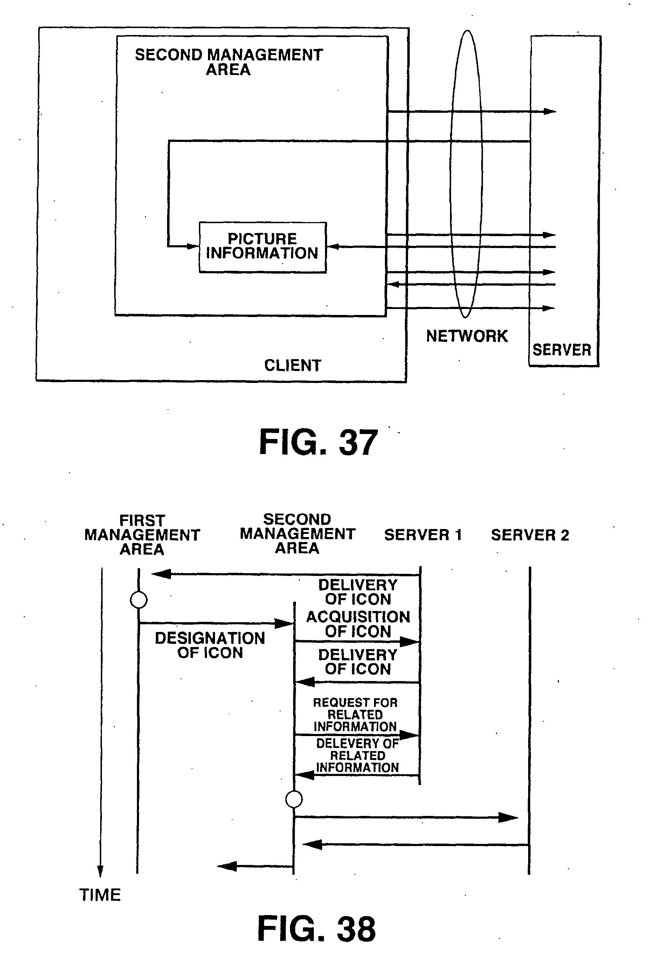

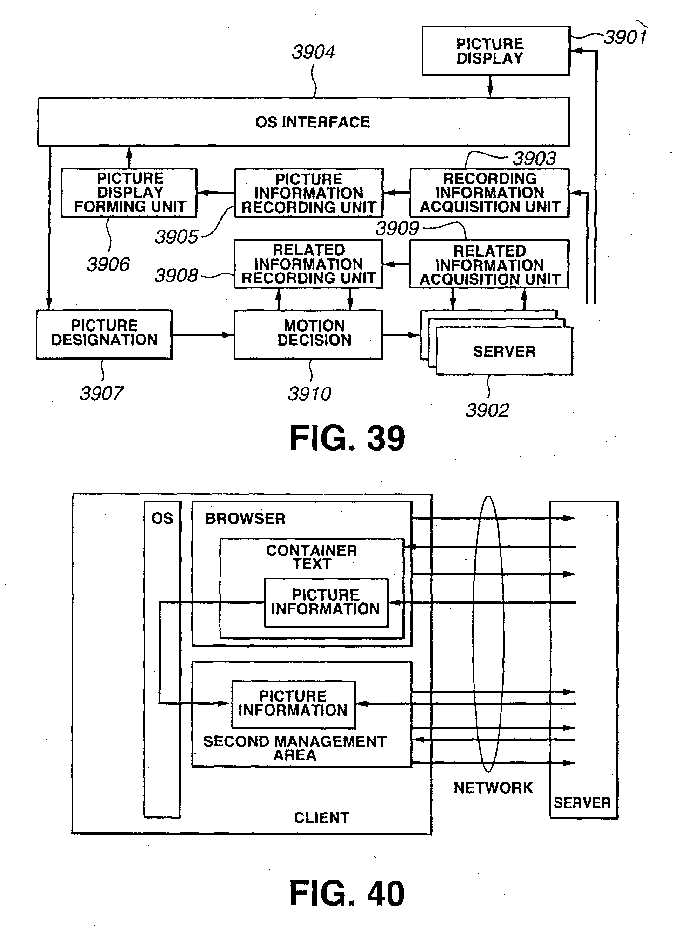

A seventh embodiment of the present invention is now explained with reference to Figs.38 and 39.

### (12-1. Typical operation in the seventh embodiment)

A typical operating sequence is explained with reference to Fig.38.

In the present embodiment, if, after displaying a picture in the first management area in accordance with the icon and the container supplied by the information provider, the icon is identified by an operator and registered, the icon in question is transferred from the first management area to the second management area so that the icon is displayed in the second management area. Meanwhile, it may be sufficient to transfer an identifier pertinent to the picture information without it being unnecessary to transfer the icon picture information itself. The identifier is designed to specify the icon using e.g., the GUID (globally unique identifier). If the information is included in an icon, the identifier including the information may also be transferred.

The control of the second management area now transfers to again requesting the providing of an icon to the server. The server is responsive thereto to furnish an icon. The second management area displays the newly acquired icon in place of the icon transferred as described above.

The control in the second management area also transfers to requesting the related information to the server.

When the operator has identified the icon placed in the second management area, processing is carried out based on the related information corresponding to the icon. If there are plural related information, at least one of them is selected and the information is requested from the server corresponding to this related information and is received. The information requested is displayed on the information display terminal. Of course, if the related information indicates not the information display but the program running, it is sufficient to execute the program without requesting the information from the server.

By the above-described structure, it is possible for a server to offer services such as stake. Since it is unnecessary to execute special processing for the icon at the outset, the object of the present invention can be accomplished readily.

### (12-2. Typical structure in the seventh embodiment)

A typical structure of a seventh embodiment of the present invention is shown in Fig.39.

A picture display unit is a browser, such as the Internet Explorer, and operates as the first management area. That is, the picture display unit 3901 acquires data from a server 3902 to display the letters or the picture.

If it is detected that an icon has been specified by an operator from operating means in the picture display unit 3901, an event is notified through an OS interface 3904. Consequently, a recording information acquisition unit 3903 makes a request to the server to acquire a new icon to acquire the icon.

A picture information recording unit 3905 is connected to the recording information acquisition unit 3903 and is adapted for storing the picture information acquired by the recording information acquisition unit 3903 either directly or subject to preset code conversion. The so-recorded picture information is furnished to a picture display forming unit 3906 so that the recorded picture information will be displayed in the one-touch frame, as the second management area.

The picture display forming unit 3906 is connected to the picture information recording unit 3905 to manage control to display the icon recorded in the picture information recording unit 3905 on the one-touch frame.

If the operator has specified the icon displayed on the one-touch frame through operating means, a picture specifying unit 3907 makes an inquiry at a related information recording unit 3908, as later explained, so that the operation will be initiated on the basis of the related information corresponding to the specified icon. The related information then is acquired and, based on this related information, the operation is initiated. Meanwhile, if the related information is comprised of plural information, control may be managed to display candidates for selection by way of display for the operator to select certain related information. From these candidates for selection, the operator may select the related information based on which the operation is to be initiated. If the related information is made up of plural information, it is of course possible to confirm the contents of the related information and to initiate the operation based on the so-confirmed related information.

A related information acquisition unit 3909 receives a command issued from the OS interface 3904 when an icon for the first management area is specified and connects to a preset server 3902 to acquire the related information corresponding to the specified icon.

A related information recording unit 3908 is connected to the related information acquisition unit 3909 and to a operation decision unit 3901 to record the related information extracted in the related information acquisition unit 3909 along with the pertinence relation information with respect to the icon in question. When notified from the picture specifying unit 3907 that the icon has been specified, the related information corresponding to the icon in question is notified to the operation decision unit 3910.

On receipt of a command from the picture specifying unit 3907, the operation decision unit 3910 decides which of the related information pertinent to the so-specified icon has been selected to process its contents. If connection is to be made to a specified server, the information in question is accessed over a network.

### (13. Others)

### (13-1. Module forming)

In the above-described embodiment, it is possible to realize a bookmark function which can be used more readily through an icon. If, in the realization thereof, general-purpose browsers, such as Internet Explorer or Netscape Navigator, are implemented as units and used to realize the function of the first management area by these browser programs, it is sufficient that the portions of the above-described respective embodiments excluding the picture display unit are realized as a compact program.

### (13-2. Program distribution)

If the configuration explained in the above-described embodiments is to be implemented on a computer, it is possible to distribute a program so that the computer will operate as described above. In such case, the program may be distributed over the network or may be achieved using an information recording medium, such as CD-ROM. If module forming is made as described above, the program may be distributed over the network, or using an information recording medium, such as CD-ROM.

### (13-3. Communication)

In the above-described embodiments, communication in each portion has been explained using COM or OLE as representative case. This, however, is not mandatory. For example, if an OS other than the Windows or a monitor program is used, it is sufficient to use other communication means.

### (13-4. OS interface)

In the above-described embodiments, the OS interface receives a signal from operating means, not shown, in connection with an operation of the operator on the first management area or on the second management area, as a common feature, to detect that a certain operational command has been issued, to communicate the gist of such detection to a proper site. In the Windows, the OS interface supports the task-to-task communication, such as COM service.

### (1. Specified case corresponding to first embodiment)

Fig.10 shows an embodiment corresponding to the first embodiment executed in a computer environment. In connection with the flow of the respective information, the same numerals as those used in Fig.8 indicating the typical operation are used.

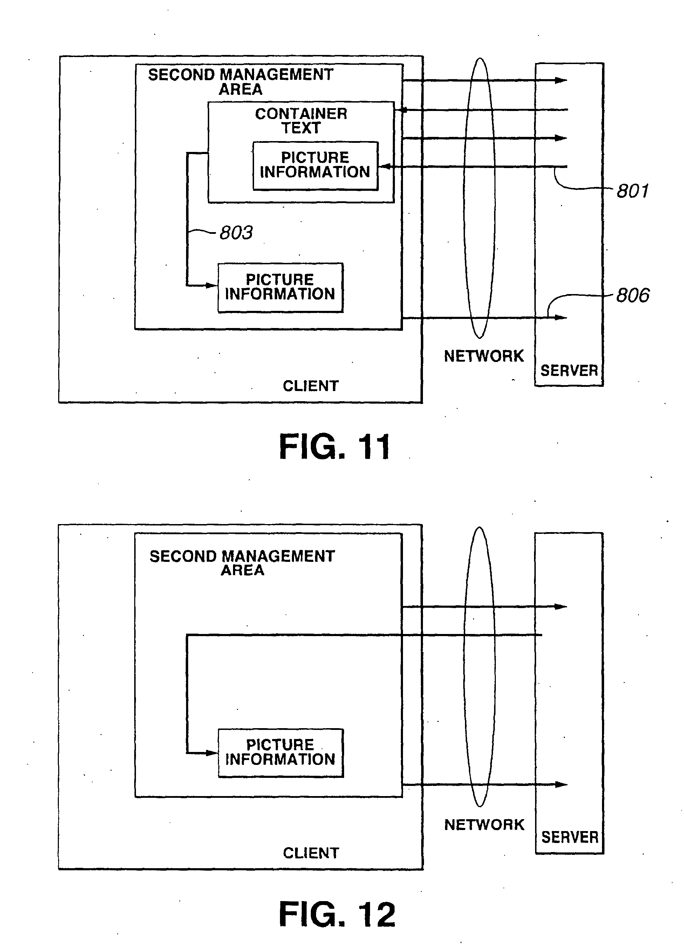

Fig.11 shows a specified embodiment corresponding to the first embodiment executed in a computer environment.

Fig.12 shows the first embodiment executed in the PDA (Personal Data Assistance) environment. In connection with the flow of the respective information, the same numerals as those used in Fig.8 indicating the typical operation are used.

### (2. Modification of the second embodiment)

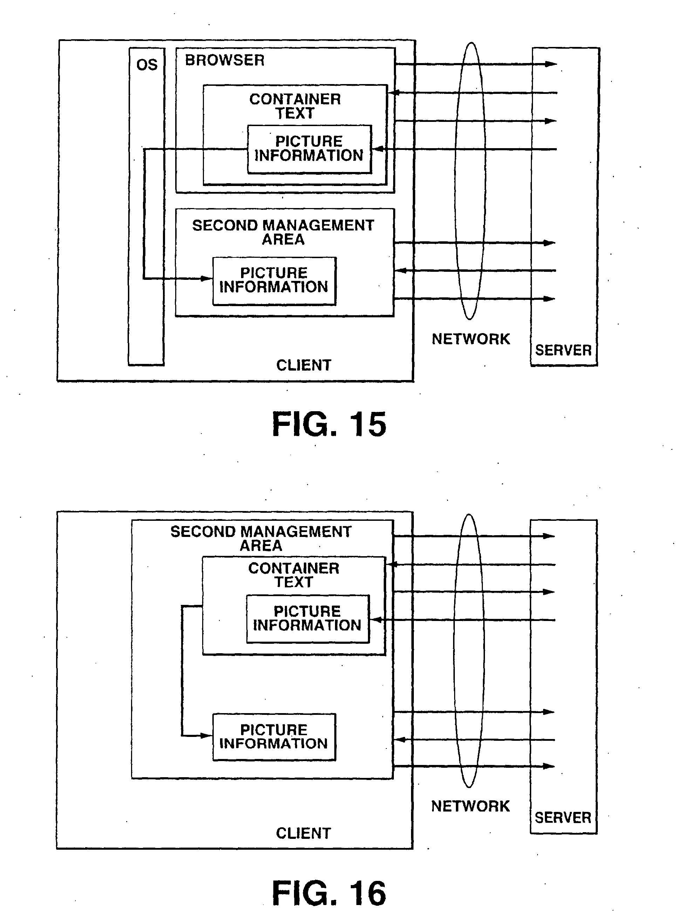

Fig.15 shows the second embodiment executed in a computer environment. In connection with the flow of the respective information, the same numerals as those used in Fig.13 indicating the typical operation are used.

Fig.16 shows a specified embodiment corresponding to the second embodiment executed in a digital television environment.

Fig.17 shows the second embodiment executed in the PDA (Personal Data Assistance) environment. In connection with the flow of the respective information, the same numerals as those used in Fig.13 indicating the typical operation are used.

### (3. Modification of the third embodiment)

Fig.20 shows an embodiment corresponding to the first embodiment executed in a computer environment. In connection with the flow of the respective information, the same numerals as those used in Fig.18 indicating the typical operation are used.

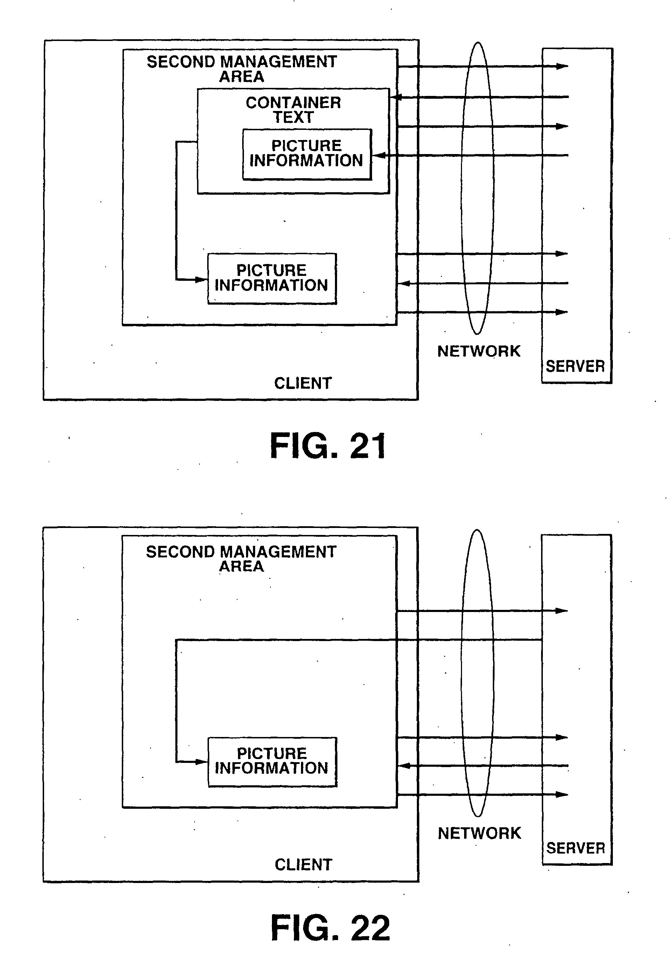

Fig.21 shows a specified embodiment corresponding to the first embodiment executed in a computer environment.

Fig.22 shows the first embodiment executed in the PDA (Personal Data Assistance) environment. In connection with the flow of the respective information, the same numerals as those used in Fig.18 indicating the typical operation are used.

### (4. Modification of the fourth embodiment)

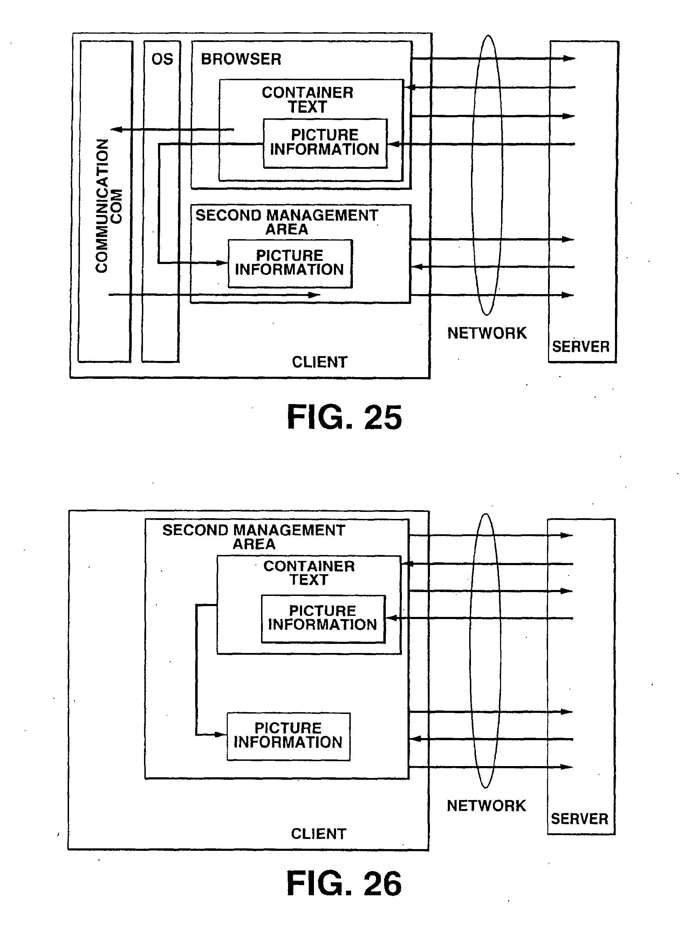

Fig.25 shows the second embodiment executed in a computer environment. In connection with the flow of the respective information, the same numerals as those used in Fig.23 indicating the typical operation are used.

Fig.26 shows a specified embodiment corresponding to the second embodiment executed in a digital television environment.

Fig.27 shows the second embodiment executed in the PDA (Personal Data Assistance) environment. In connection with the flow of the respective information, the same numerals as those used in Fig.23 indicating the typical operation are used.

### (5. Modification of the fifth embodiment)

Fig.30 shows a modification of the fifth embodiment executed in a computer environment. In connection with the flow of the respective information, the same numerals as those used in Fig.28 indicating the typical operation are used.

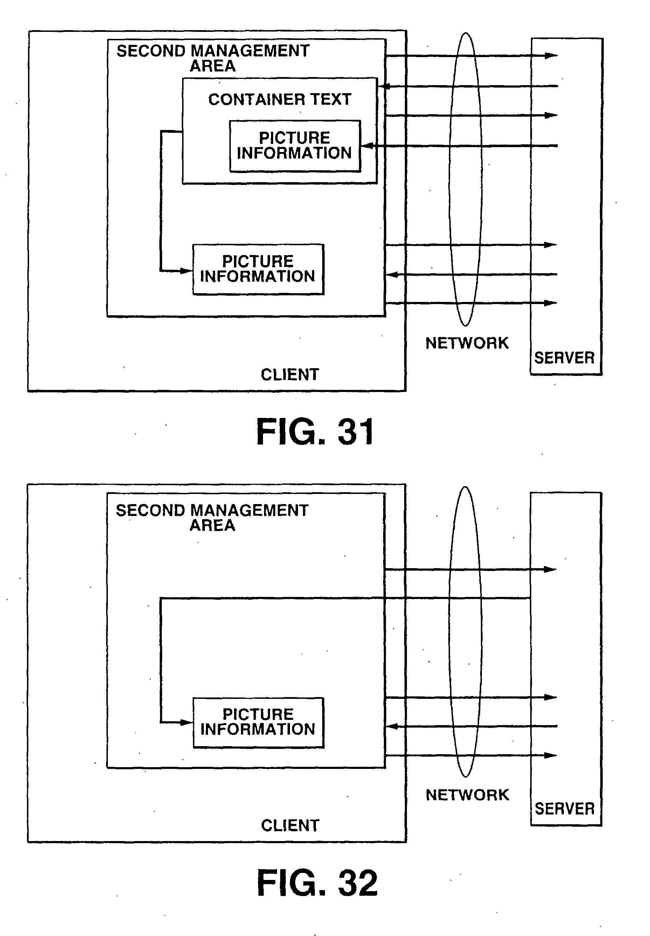

Fig.31 shows a specified embodiment corresponding to the fifth embodiment executed in a digital television environment.

Fig.32 shows a specified embodiment executed in the PDA (Personal Data Assistance) environment. In connection with the flow of the respective information, the same numerals as those used in Fig.28 indicating the typical operation are used.

### (6. Modification of the sixth embodiment)

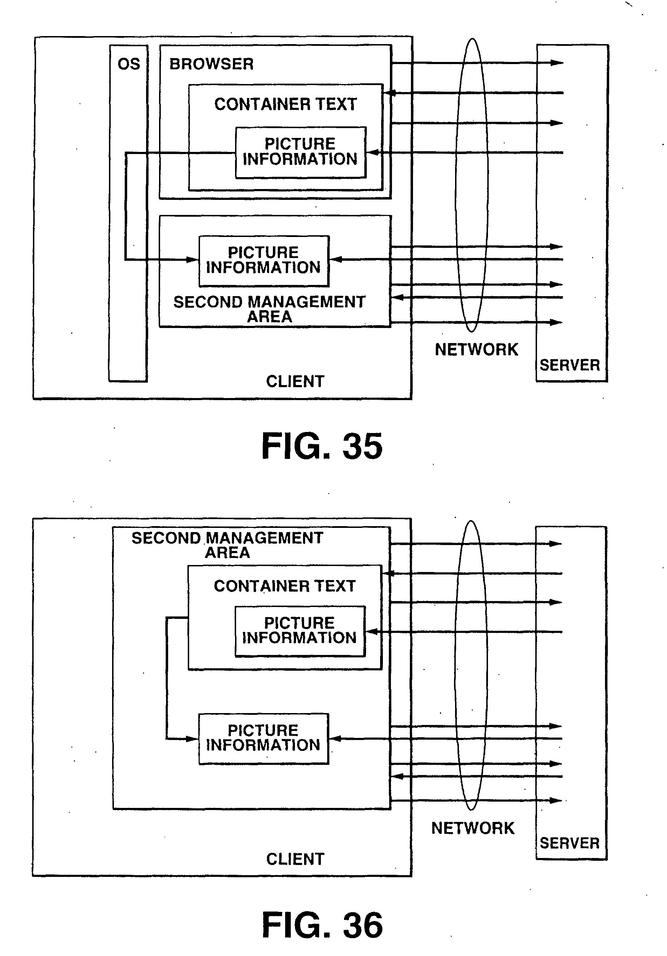

Fig.35 shows a specified embodiment corresponding to the sixth embodiment executed in a computer environment. In connection with the flow of the respective information, the same numerals as those used in Fig.33 indicating the typical operation are used.

Fig.36 shows a specified embodiment corresponding to the sixth embodiment executed in a digital television environment.

Fig.37 shows the first embodiment executed in the PDA (Personal Data Assistance) environment. In connection with the flow of the respective information, the same numerals as those used in Fig.33 indicating the typical operation are used.

### (7. Modification of the seventh embodiment)

Fig.40 shows the seventh embodiment executed in a computer environment. In connection with the flow of the respective information, the same numerals as those used in Fig.38 indicating the typical operation are used.

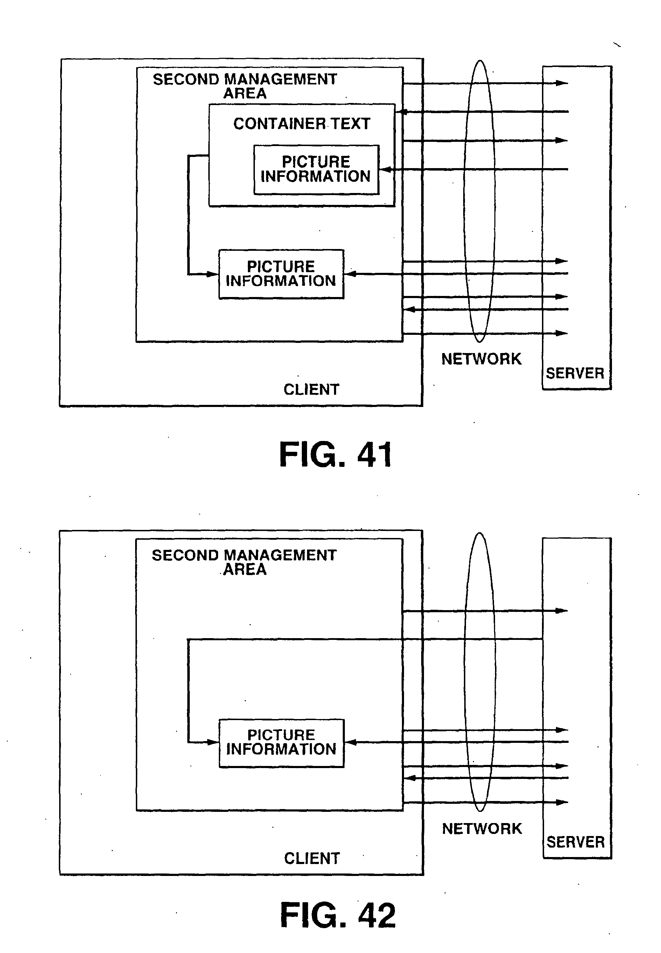

Fig.41 shows a specified embodiment corresponding to the second embodiment executed in a digital television environment.

Fig.42 shows the first embodiment executed in the PDA (Personal Data Assistance) environment. In connection with the flow of the respective information, the same numerals as those used in Fig.38 indicating the typical operation are used.

As for the form of embedding the related information for the icon, it may be packaged in an icon form as described above, or may be packaged using the Java applet or Active X control.

Both the Java applet and the ActiveX control are program units that can be executed by the browser software such as Netscape or Internet Explorer. The code for execution for the Java applet and that for the ActiveX control are stated by a native code of the CPU and can be booted by the respective browsers. Both the Java applet and the ActiveX control are able to make graphic display on the browser display surface.

If the Java applet and the ActiveX control are used, an applet just sufficient to display the picture is provided in place of the icon having the related information embedded therein. While the icon is displayed on the browser using the <IMG> tag, the applet can also be executed using <EMBED> or <APPLET> tag.

In these two cases, it is sufficient that the related information is embedded in the program form.

### Industrial Applicability

According to the present invention, as described above, a variety of information furnished by the information provider can be effectively put into order on the part of the viewer using an icon as a clue. On the part of the information provider, effective information providing can be realized.

## Claims

1. An information display apparatus wherein the picture information having an identifier for specifying is obtained from an information source and displayed, the related information is requested from a server with said identifier as a clue, and wherein, if an operator has specified the picture information, processing is initiated based on said related information.

2. An information display apparatus wherein an information container including the information specifying the picture information and the related information corresponding to said picture information is obtained from an information source and interpreted, after which said picture information is obtained and displayed, and wherein processing is started based on said related information when an operator has identified said picture information.

3. An information display apparatus wherein an information container including the information specifying the picture information and the related information corresponding to said picture information is obtained from an information source and interpreted, after which said picture information is obtained and displayed in a first management area;
if an operator has specified the picture information displayed in said first management area, said related information and the picture are memorized and the picture information is displayed in a second management area; and wherein
if the operator has specified the picture information displayed in said second management area, processing is initiated based on the related information associated with said picture.

4. An information display apparatus wherein the first picture information is obtained from an information source and displayed in a first management area; if an operator has specified the first picture information, the second picture information and the related information pertinent to said second picture information are obtained anew from the information source and memorized, with said second picture information being displayed in a second management area; and wherein, if the operator has specified the second picture information displayed in said second management area, processing is initiated based on the related information associated with said picture.

5. An information display apparatus wherein, if a notification to the effect that an operator has specified the picture information from a unit adapted for obtaining and displaying the picture information is made after obtaining an information container including the information specifying the picture information and the related information pertinent to said picture information from an information source,
said related information is acquired from said unit and processing is initiated based on the so acquired related information.

6. An information display apparatus wherein, if a notification to the effect that an operator has specified the picture information from a unit adapted for obtaining and displaying the picture information is made after obtaining an information container including the information specifying the picture information and the related information pertinent to said picture information from an information source, said related information and the picture are acquired from said unit and memorized, said picture information is displayed on a management area on a display device, and wherein, if the operator has specified the picture information displayed on said management area, processing is initiated based on the related information associated with said picture information.

7. An information display apparatus wherein, if a notification is made from a unit adapted for acquiring the first picture information from an information source for display on a first management area, to the effect that the operator has specified the first picture information, the second picture information and the related information pertinent to said second picture information are obtained from the information source and memorized, said second picture information being displayed on a second management area, and wherein
if the operator has specified the second picture information displayed on the second management area, processing is initiated based on the related information associated with said picture.

8. An information recording medium having recorded thereon a program which causes a computer to operate as an information display apparatus which, if, from a unit for obtaining the picture information from an information source and for displaying the so acquired picture information after acquiring and interpreting an information container including the information specifying the picture information and the related information pertinent to said picture information, a notification is made to the effect that an operator has specified the picture information, acquires said related information from said unit to initiated processing based on said related information.

9. An information recording medium having recorded thereon a program which causes a computer to operate as an information display apparatus which, if, from a unit for obtaining the picture information from an information source and for displaying the so acquired picture information after acquiring and interpreting an information container including the information specifying the picture information and the related information pertinent to said picture information, a notification is made to the effect that an operator has specified the picture information, acquires and memorizes said related information and said picture from said unit, while displaying said picture information in a management area on said display device, said information display apparatus initiating the processing based on the related information associated with the picture information when the operator has specified the picture information displayed in said management area.

10. An information recording medium having recorded thereon a program which causes a computer to operate as an information display apparatus which, if, from a unit for obtaining the picture information from an information source and for displaying the so acquired picture information, a notification is made to the effect that an operator has specified the first picture information, and if the second picture information and the related information pertinent to said second picture information are acquired from an information source and memorized, the second picture information is displayed in a second management area and the operator has specified the second picture information displayed in said second management area, causes a computer to operate as an information display apparatus initiating the processing based on the related information associated with said picture.

11. An information providing apparatus for providing the information specifying, as an information container, the picture information and at least two related information which will guide an operator to execute a preset processing in association with said picture information.

12. An information recording medium having recorded thereon a program which causes a computer to operate as an information providing apparatus for providing the information specifying, as an information container, the picture information and at least two related information which will guide an operator to execute a preset processing in association with said picture information.
